# EUROPÄISCHE PATENTANMELDUNG

(11) **EP 4 600 511 A1**
(43) Veröffentlichungstag der Anmeldung: **13.08.2025**
(21) Anmeldenummer: 24156542.3
(22) Anmeldetag: 08.02.2024
(51) Int. Cl.: F16B 19/00, H01R 4/20, H01R 43/04

(54) **STÜTZHÜLSE ZUR FIXIERUNG EINES KABELSCHIRMS, KABELSTECKVERBINDERANORDNUNG UND VERFAHREN ZUR HERSTELLUNG EINER KABELSTECKVERBINDERANORDNUNG**

(71) Anmelder: Rosenberger Hochfrequenztechnik GmbH & Co. KG, 83413 Fridolfing (DE)
(72) Erfinder: Speckbacher, Hubert, 83413 Fridolfing (DE); Egger, Tobias, 83413 Fridolfing (DE); Salemink, Matthias, 83413 Fridolfing (DE)
(74) Vertreter: Lorenz, Matthias

(57) **Zusammenfassung**

Die Erfindung betrifft eine Stützhülse (11) zur Fixierung eines Kabelschirms (5) eines elektrischen Kabels (2), die zur Aufnahme eines Endabschnitts (12) des elektrischen Kabels (2) ausgebildet ist, und ausgehend von einem mechanisch entspannten Zustand entgegen einer elastischen Rückstellkraft in einen elastisch vorgespannten Zustand komprimierbar ist, in dem ein erster Abstand (A₁) zwischen zwei gegenüberliegenden Referenzpunkten (P_{Ref}) auf einer Au-ßenmantelfläche (13) der Stützhülse (11) gegenüber einem zweiten Abstand (A₂) der beiden Referenzpunkte (P_{Ref}) im mechanisch entspannten Zustand verringerten ist. Es ist vorgesehen, dass die Stützhülse (11) einen Kunststoffwerkstoff aufweist, dessen Relaxationsbeständigkeit und/oder Festigkeit und/oder Temperaturbeständigkeit und/oder Bruchfestigkeit durch Beimischung zumindest eines Zusatzwerkstoffes erhöht ist.

## Beschreibung

Die Erfindung betrifft eine Stützhülse zur Fixierung eines Kabelschirms eines elektrischen Kabels, die zur Aufnahme eines Endabschnitts des elektrischen Kabels ausgebildet ist, und ausgehend von einem mechanisch entspannten Zustand entgegen einer elastischen Rückstellkraft in einen elastisch vorgespannten Zustand komprimierbar ist.

Die Erfindung betrifft außerdem eine Kabelsteckverbinderanordnung, insbesondere für die Hochvolttechnik, aufweisend eine Stützhülse zur Fixierung eines Kabelschirms eines elektrischen Kabels zwischen der Stützhülse und einem Außenleiterkontaktelement eines elektrischen Steckverbinders.

Die Erfindung betrifft ferner ein Verfahren zur Herstellung einer Kabelsteckverbinderanordnung, insbesondere zur Herstellung einer Kabelsteckverbinderanordnung für die Hochvolttechnik.

Bei der Konfektionierung von Kabeln werden deren Leiter typischerweise mit Kontaktelementen eines Steckverbinders verbunden. Diese Kontaktelemente dienen bei der späteren Verwendung des Steckverbinders dazu, korrespondierende Gegenkontaktelemente eines Gegensteckverbinders zu kontaktieren. Hierfür ist eine in mechanischer und elektrischer Hinsicht sichere bzw. robuste und außerdem langlebige Verbindung zwischen den Kabelkomponenten und den Steckverbinderkomponenten zu realisieren, so dass sich der Steckverbinder für möglichst viele Steckzyklen und auch für den Einsatz bei widrigen Umgebungsbedingungen eignet. Nicht zuletzt sollte insbesondere auch sichergestellt sein, dass sich die elektrische und mechanische Verbindung zwischen den Kabelkomponenten und Steckverbinderkomponenten bei Quer- und/oder Längszug am Kabel nicht unbeabsichtigt löst.

Zur Fixierung eines Kabelschirms bzw. Außenleiters des Kabels an einem Außenleiterkontaktelement des Steckverbinders wird regelmäßig eine Stützhülse verwendet. In der Regel wird der Kabelschirm hierfür zwischen der Stützhülse und dem Außenleiterkontaktelement kraftschlüssig und/oder formschlüssig befestigt, insbesondere eingeklemmt. Dies wird in der Praxis zumeist durch ein Verpressen bzw. Vercrimpen des Außenleiterkontaktelements auf der Stützhülse realisiert. Die Stützhülse wird hierdurch ausgehend von ihrem mechanisch entspannten Grundzustand komprimiert, wodurch in der Stützhülse eine elastische Vorspannung erzeugt wird. Unter anderem durch diese Rückstellkraft bzw. Federkraft der Stützhülse wird der Kabelschirm schließlich ausreichend mechanisch und elektrisch stabil an das Außenleiterkontaktelement fixiert.

Die Anforderungen an die elektrische und mechanische Verbindung zwischen Kabelschirm und Außenleiterkontaktelement sind in der Regel sehr hoch, insbesondere bei Steckverbindern für die Automobilindustrie bzw. für Fahrzeuge (z. B. in der Hochvolttechnik), sowie betreffend (Daten-)Steckverbinder für die Hochfrequenztechnik. In elektrischer Hinsicht kommt es in der Regel auf einen niedrigen Übergangswiderstand und einen impedanzangepassten Übergang an. Ferner sollte sichergestellt sein, dass die beteiligten Komponenten und Materialien ihre mechanischen und elektrischen Eigenschaften auch langfristig aufrechterhalten.

Um diese Vorgaben zu erfüllen, sind Stützhülsen regelmäßig als metallische Drehteile ausgebildet, vorzugsweise aus einem Buntmetall (wie z. B. Messing oder Bronze) oder aus Federstahl. Derartige Stützhülsen eignen sich für die erforderliche Verformung im Rahmen des Crimpprozesses und für einen langlebigen Einsatz erfahrungsgemäß besonders gut. Die Herstellung der bekannten Stützhülsen ist allerdings kostenintensiv und aufwändig, was der zusätzlichen Anforderung an die wirtschaftliche Herstellbarkeit der Steckverbinder im Rahmen einer Massenfertigung entgegensteht.

In Anbetracht des bekannten Stands der Technik besteht die Aufgabe der vorliegenden Erfindung darin, eine Stützhülse bereitzustellen, mit weiterhin vorteilhaften Eigenschaften zur Fixierung eines Kabelschirms im Rahmen einer Kabelkonfektionierung, die insbesondere kostengünstig im Rahmen einer Massenfertigung herstell- und montierbar ist.

Der vorliegenden Erfindung liegt auch die Aufgabe zugrunde, eine Kabelsteckverbinderanordnung bereitzustellen, die eine mechanisch und elektrisch vorteilhafte Stützhülse zur Fixierung eines Kabelschirms an einem Außenleiterkontaktelement aufweist, und die insbesondere kostengünstig im Rahmen einer Massenfertigung herstell- und montierbar ist.

Schließlich ist es auch eine Aufgabe der Erfindung, ein Verfahren bereitzustellen, mittels dem eine elektrisch und mechanisch vorteilhafte Kabelsteckverbinderanordnung insbesondere kostengünstig im Rahmen einer Massenfertigung herstell- und montierbar ist.

Die Aufgabe wird für die Stützhülse mit den in Anspruch 1 aufgeführten Merkmalen gelöst. Bezüglich der Kabelsteckverbinderanordnung wird die Aufgabe durch die Merkmale des Anspruchs 13 und betreffend das Verfahren durch Anspruch 14 gelöst.

Die abhängigen Ansprüche und die nachfolgend beschriebenen Merkmale betreffen vorteilhafte Ausführungsformen und Varianten der Erfindung.

Die Erfindung betrifft eine Stützhülse zur Fixierung eines Kabelschirms eines elektrischen Kabels.

Vorzugsweise ist die Stützhülse zur kraftschlüssigen und/oder formschlüssigen Fixierung des Kabelschirms vorgesehen. Insbesondere kann vorgesehen sein, dass der Kabelschirm zwischen der Stützhülse und einem Außenleiterkontaktelement kraftschlüssig und/oder formschlüssig fixierbar ist, insbesondere einklemmbar ist. Vorzugsweise ist der Kabelschirm zwischen einer Klemmfläche der Stützhülse und einer Klemmfläche des Außenleiterkontaktelements einklemmbar, besonders bevorzugt zwischen einer Außenmantelfläche der Stützhülse und einer Innenmantelfläche des Außenleiterkontaktelements.

Das Außenleiterkontaktelement kann mit der Stützhülse bzw. auf der Stützhülse verpressbar bzw. vercrimpbar sein - oder umgekehrt.

Mittels der vorgeschlagenen Stützhülse kann der Kabelschirm des elektrischen Kabels somit an dem Außenleiterkontaktelement des auf dem entsprechenden Kabelende des Kabels zu montierenden elektrischen Steckverbinders fixiert werden.

Vorzugsweise sind das elektrische Kabel, dessen Außenleiter bzw. Kabelschirm, der elektrische Steckverbinder und/oder das Außenleiterkontaktelement nicht als Teil der anspruchsgemäßen Stützhülse zu verstehen. Die Anmelderin behält sich jedoch vor, auch Kombinationen aus Stützhülse, Kabelschirm, Kabel, Außenleiterkontaktelement und/oder Steckverbinder oder die besagten Gegenstände jeweils einzeln bzw. separat zu beanspruchen.

Die Stützhülse und das Außenleiterkontaktelement können nachfolgend auch als Steckverbinderkomponenten des Steckverbinders bezeichnet werden (neben weiteren optionalen Steckverbinderkomponenten.

Erfindungsgemäß ist die Stützhülse zur Aufnahme eines Endabschnitts des elektrischen Kabels ausgebildet.

Bei dem Endabschnitt des elektrischen Kabels, der zur Aufnahme in der Stützhülse vorgesehen ist, kann es sich insbesondere um den Endabschnitt des elektrischen Kabels handeln, auf dem der elektrische Steckverbinder montiert werden soll. Vorzugsweise ist die Stützhülse an einer definierten axialen Position des Endabschnitts des elektrischen Kabels positioniert, so dass sich das elektrische Kabel vollständig durch die Stützhülse hindurch erstreckt.

Es kann vorgesehen sein, dass der Kabelmantel des Kabels innerhalb der Stützhülse endet, so dass die Stützhülse vorzugsweise auch zumindest abschnittsweise auf dem Kabelmantel befestigbar ist, insbesondere auf dem Kabelmantel verpressbar ist. Die Stützhülse kann einen Anschlag aufweisen, an dem das entsprechende Ende des Kabelmantels anschlägt, so dass die Stützhülse relativ zu dem Ende des Kabelmantels optimal positionierbar bzw. ausrichtbar ist. Hierzu können sich beispielsweise der nachfolgend noch genannte Bund oder die Bundsegmente der Stützhülse eignen. Der Kabelmantel muss aber nicht unbedingt innerhalb der Stützhülse enden. Es kann beispielsweise auch vorgesehen sein, dass sich der Kabelmantel vollständig durch die Stützhülse hindurch erstreckt oder dass sich die Stützhülse entlang der Längsachse des Kabels unmittelbar an den Kabelmantel anschließt.

Der Endabschnitt des elektrischen Kabels kann unbearbeitet, in der Regel aber bereits teilweise vorkonfektioniert/vorbearbeitet sein, wenn die Stützhülse montiert wird. Insbesondere kann vorgesehen sein, dass der Endabschnitt des elektrischen Kabels zumindest abschnittsweise abisoliert ist, so dass eine oder mehrere Kabelkomponenten des elektrischen Kabels zumindest teilweise freigelegt und für die Verbindung mit den Steckverbinderkomponenten zugänglich sind. Beispielsweise kann vorgesehen sein, dass einer oder mehrere Innenleiter des elektrischen Kabels zumindest abschnittsweise ausgehend von einem vorderen, steckerseitigen Ende von einem umhüllenden Dielektrikum freigelegt sind. Ferner kann der Kabelschirm des elektrischen Kabels zumindest teilweise von einer äußeren Umhüllung und/oder Schirmungsfolie freigelegt sein, so dass er für die Fixierung zwischen Stützhülse und Außenleiterkontaktelement zugänglich ist.

Bei dem Kabelschirm kann es sich insbesondere um ein Kabelschirmgeflecht des elektrischen Kabels handeln, also insbesondere um ein Geflecht aus miteinander verflochtenen Einzeldrähten. Grundsätzlich kann der Begriff "Kabelschirm" allerdings auf jede Art von Außenleiter des elektrischen Kabels verstanden werden, also insbesondere auch auf eine Schirmungsfolie oder eine Kombination aus Kabelschirmgeflecht und Schirmungsfolie.

Grundsätzlich kann sich die vorgeschlagene Stützhülse zur Verwendung mit einem beliebigen elektrischen Kabel eignen. Es kann im Rahmen der Erfindung unter anderem ein elektrisches Kabel vorgesehen sein, das eine beliebige Anzahl an Innenleitern bzw. Kabeladern aufweist. Beispielsweise kann ein elektrisches Kabel im Rahmen der Erfindung einen Innenleiter, zwei Innenleiter, drei Innenleiter, vier Innenleiter oder noch mehr Innenleiter aufweisen. Vorzugsweise ist ein elektrisches Kabel mit genau einem Innenleiter oder genau zwei Innenleitern vorgesehen. Sofern ein elektrisches Kabel mit nur einem Innenleiter vorgesehen ist, kann dieses als Koaxialkabel ausgebildet sein. Sofern ein elektrisches Kabel mit mehr als einem Innenleiter vorgesehen ist, können die Kabeladern des Kabels verdrillt sein, in der Art eines "Twisted-Pair"-Kabels; die Kabeladern können jedoch auch parallel geführt werden, wie beispielsweise bei einem "Parallel-Pair"-Kabel.

Erfindungsgemäß ist die Stützhülse ausgehend von einem mechanisch entspannten Zustand entgegen einer elastischen Rückstellkraft in einen elastisch vorgespannten Zustand komprimierbar. In dem elastisch vorgespannten Zustand, der nachfolgend mitunter auch als "komprimierter Zustand" bezeichnet wird, ist der Abstand (nachfolgend: "erster Abstand") zwischen zwei gegenüberliegenden Referenzpunkten auf einer Außenmantelfläche und/oder Innenmantelfläche der Stützhülse gegenüber dem Abstand (nachfolgend: "zweiter Abstand") der beiden Referenzpunkte im mechanisch entspannten Zustand verringert.

An dieser Stelle sei erwähnt, dass im Rahmen der beschriebenen Komprimierung der Stützhülse neben der elastischen Vorspannung / Rückstellkraft optional auch eine dauerhafte bzw. plastische Verformung der Stützhülse bewirkt werden kann. In der Regel führt die Komprimierung der Stützhülse zu einem plastisch und elastisch verformten komprimierten Zustand.

Im Falle eines runden Querschnitts der Stützhülse, der - wie nachfolgend noch ausgeführt - aber nicht unbedingt erforderlich ist, kann also beispielsweise der Außendurchmesser und/oder Innendurchmesser der Stützhülse in dem komprimierten Zustand verkleinert sein.

Erfindungsgemäß weist die Stützhülse einen Kunststoffwerkstoff auf, dessen Relaxationsbeständigkeit und/oder Festigkeit und/oder Temperaturbeständigkeit und/oder Bruchfestigkeit durch Beimischung zumindest eines Zusatzwerkstoffes erhöht ist.

"Relaxation" beschreibt in diesem Zusammenhang den Spannungsabfall in der Stützhülse im Zeitverlauf bei einer vorhergehenden Dehnung oder Stauchung der Stützhülse. Relaxation bezeichnet damit den Übergang der Stützhülse zurück in ihren Grundzustand bzw. Gleichgewichtszustand nach einer äußeren Anregung oder Störung.

Die vorgeschlagene Stützhülse kann vorzugsweise mechanisch besonders robuste Eigenschaften aufweisen und außerdem außerordentlich alterungsbeständig sein. Dadurch, dass erfindungsgemäß eine Stützhülse zur Fixierung eines Kabelschirms eines elektrischen Kabels vorgeschlagen wird, die aus einem Kunststoffwerkstoff ausgebildet ist, kann die Stützhülse deutlich kostengünstiger und einfacher herstellbar sein als die bekannten metallischen Stützhülsen. Die vorgeschlagene Stützhülse eignet sich daher insbesondere zur Verwendung in einer Kabelsteckverbinderanordnung bzw. in einem Steckverbinder, der im Rahmen einer Massenfertigung herstellbar ist. Gleichzeitig können die erforderlichen mechanischen Eigenschaften der Stützhülse durch die vorgeschlagene Beimischung des Zusatzwerkstoffs ausreichend erhöht werden, so dass sich die Stützhülse für die geforderte Aufgabe (Fixierung des Kabelschirms) weiterhin gut eignet.

In einer vorteilhaften Weiterbildung der Erfindung kann vorgesehen sein, dass die Stützhülse zumindest im Wesentlichen aus dem Kunststoffwerkstoff nebst beigemischtem Zusatzwerkstoff besteht. Dies soll jedoch nicht ausschließen, dass es gegebenenfalls auch noch weitere Bestandteile geben kann (vorzugsweise jedoch weniger als 1-10%, besonders bevorzugt weniger als 0,5-5%, weiter bevorzugt weniger als 0,5-2%), insbesondere solche, die die wesentlichen Merkmale der Stützhülse nicht signifikant verändern (wie beispielsweise Verschmutzungen oder Restbestandteile sonstiger Werkstoffe).

Es kann vorgesehen sein, dass die Stützhülse einstückig bzw. einteilig ausgebildet ist. Bei der Stützhülse kann es sich somit um ein einzelnes Bauteil handeln. Gegebenenfalls kann allerdings auch eine mehrteilige Stützhülse vorgesehen sein, beispielsweise eine zweiteilige Stützhülse, die aus zwei miteinander verbindbaren Halbschalen ausgebildet ist.

Gemäß einer Weiterbildung der Erfindung kann vorgesehen sein, dass der Zusatzwerkstoff die Form von Fasern und/oder Kugeln aufweist.

Die Verwendung eines Zusatzwerkstoffs, der in Form einzelner Fasern und/oder Kugeln dem Kunststoffwerkstoff beigemischt wird, hat sich als besonders vorteilhaft herausgestellt. Grundsätzlich kann der Zusatzwerkstoff im Rahmen der Erfindung allerdings beliebige Formen bzw. Geometrien aufweisen.

Vorzugsweise handelt es sich bei dem Zusatzwerkstoff um Glas, Kohlenstoff, Aramid, Metall (es können reine Metalle, aber auch Legierungen in Frage kommen) und/oder um einen organischen Werkstoff (z. B. Harze, Naturfaserwerkstoffe, u. a. Hanf). Ganz besonders bevorzugt sein können insbesondere Glasfasern, Kohlenstofffasern oder Aramidfasern (die genannten Werkstoffe können aber auch als Kugeln vorliegend, wie vorstehend erwähnt, oder alternativ als anderen geometrische Formen). Es sei betont, dass die genannten Beispiele zwar grundsätzlich bevorzugt sind, alternativ aber auch noch andere Werkstoffe für den Zusatzwerkstoff in Frage kommen können. Grundsätzlich können beliebige anorganische oder organische Werkstoffe als Zusatzwerkstoff in Frage kommen. Im Rahmen der Erfindung können außerdem auch Kombinationen mehrerer Werkstoffe gemeinsam als "Zusatzwerkstoff" im Sinne der vorliegenden Erfindung bezeichnet werden.

Bei dem Zusatzwerkstoff handelt es sich vorzugsweise nicht um einen Kunststoff.

Gemäß einer Weiterbildung der Erfindung kann vorgesehen sein, dass der Kunststoffwerkstoff einen Anteil des Zusatzwerkstoffes von 10% bis 60%, vorzugsweise 20% bis 50%, weiter bevorzugt 25% bis 40%, besonders bevorzugt 30% bis 35% aufweist. Ganz besonders bevorzugt kann der Kunststoffwerkstoff einen Anteil des Zusatzwerkstoffs von zumindest im Wesentlichen oder exakt 30% aufweisen.

Die vorstehend genannten Bereichsangaben und Verhältnisse haben sich als besonders vorteilhaft herausgestellt.

In einer Weiterbildung der Erfindung kann vorgesehen sein, dass es sich bei dem Kunststoffwerkstoff um Polyamid (PA), Polybutylenterephthalat (PBT) oder Polyetherimid (PEI) handelt.

Grundsätzlich können sich allerdings auch noch weitere Kunststoffe im Rahmen der Erfindung eignen, wobei die vorstehend genannten Beispiele zu einer besonders relaxationsbeständigen Stützhülse führen können.

Ein Beispiel für einen Kunststoffwerkstoff mit 50% Glasfaseranteil, der sich im Rahmen der Erfindung gut eignen kann, ist beispielsweise PBT-GF-50. Weitere vorteilhafte Kunststoffwerkstoff-Zusatzwerkstoff-Kombinationen können u. a. PBT-GF-30 oder PEI-GF-30 sein.

In einer Weiterbildung der Erfindung kann vorgesehen sein, dass die Stützhülse wenigstens einen in Axialrichtung zumindest teilweise durch die Stützhülse verlaufenden Längsschlitz aufweist. Die Stützhülse kann somit geschlitzt sein.

Es kann vorgesehen sein, dass sich genau ein Längsschlitz vollständig durch die Stützhülse erstreckt (beispielsweise kann hierdurch eine C-förmige bzw. teilringförmige Stützhülse bereitgestellt werden). Es kann insbesondere aber auch vorgesehen sein, dass sich einer oder mehrere Längsschlitze nur teilweise durch die Stützhülse erstrecken.

Durch den wenigstens einen Längsschlitz kann die erreichbare Durchmesserverkleinerung, also die Komprimierbarkeit der Stützhülse, verbessert sein, so dass die Stützhülse über einen größeren Bereich verformbar ist. Dies kann die Fixierung des Kabelschirms zwischen Stützhülse und Außenleiterkontaktelement und/oder die Fixierung der Stützhülse auf dem Endabschnitt des Kabels, insbesondere auf dem Kabelmantel des Kabels, verbessern.

An dieser Stelle sei jedoch erwähnt, dass sich die Erfindung auch zur Verwendung mit einer nicht geschlitzten Stützhülse eignet, auch wenn die Erfindung nachfolgend im Wesentlichen anhand einer Stützhülse beschrieben wird, die einen oder mehrere Längsschlitze aufweist. Es kann alternativ also auch eine Stützhülse vorgesehen sein, die entlang des Umfangs vollständig geschlossen ist, also beispielsweise eine ringförmige Stützhülse.

An dieser Stelle sei außerdem erwähnt, dass als Alternative zu dem wenigstens einen Längsschlitz grundsätzlich beliebige Einschlitzungen/Einkerbungen/Ausnehmungen vorgesehen sein können, die über den Umfang der Stützhülse verteilt angeordnet sind, um die Komprimierbarkeit der Stützhülse entlang ihrer Längserstreckung definiert vorzugeben.

Die Stützhülse kann grundsätzlich einen beliebigen Querschnitt aufweisen. Vorzugsweise ist der Querschnitt der Stützhülse elliptisch, insbesondere rund. Der Querschnitt der Stützhülse kann allerdings auch rechteckig sein. Insbesondere können beliebige polygonale Querschnittsgeometrien vorgesehen sein. Der Querschnitt der Stützhülse kann in Bezug zu deren Mittelachse gegebenenfalls auch unsymmetrisch sein und sich entlang der Längsachse verändern (beispielsweise verjüngen, wie nachfolgend noch im Detail ausgeführt wird).

Es kann vorteilhaft sein, sicherzustellen, dass Einzeldrähte des Kabelschirms im Rahmen der Montage nicht unbeabsichtigt in den Längsschlitz der Stützhülse ein- und an anderer Stelle wieder austreten.

Hierfür kann in einer Weiterbildung der Erfindung insbesondere vorgesehen sein, dass der Längsschlitz einen kurvigen bzw. gekrümmten/gebogenen und/oder stufigen (einstufig oder mehrstufig) Verlauf aufweist, so dass eine Passage (für Einzeldrähte des Kabelschirms) durch den Längsschlitz, insbesondere (aber nicht ausschließlich) eine geradlinige Passage, verengt oder blockiert ist. Vorzugsweise verläuft der Längsschlitz somit zumindest nicht über die gesamte Länge geradlinig.

Die zu blockierende Passage kann insbesondere eine in axialer Richtung und/oder radialer Richtung der Stützhülse verlaufende, geradlinige Passage sein.

Die besagte Verengung oder Blockierung kann abschnittsweise an einer oder mehreren beliebigen axialen Positionen ausgebildet sein, z. B. an einem oder an beiden axialen Enden der Stützhülse und/oder in einem mittleren Abschnitt der Stützhülse. Die Verengung oder Blockierung der Passage kann sich aber auch entlang der gesamten Längserstreckung der Stützhülse erstrecken.

In einer vorteilhaften Weiterbildung der Erfindung kann vorgesehen sein, dass der Längsschlitz durch eine Sollbruchstelle oder ein Scharnier (insbesondere ein Filmscharnier) unterbrochen ist, so dass der Längsschlitz in einen ersten Teilabschnitt und einen zweiten Teilabschnitt unterteilt ist.

Auch auf diese Weise kann sichergestellt werden, dass Einzeldrähte des Kabelschirms nicht unkontrolliert durch die Längsschlitze der Stützhülse verlaufen.

Vorzugsweise sind die Sollbruchstelle oder das Filmscharnier innerhalb des kurvigen und/oder stufigen Verlaufs des Längsschlitzes ausgebildet, insbesondere im Bereich eines axialen Endabschnittes oder Endes des Längsschlitzes bzw. der Stützhülse, gegebenenfalls aber auch in einem mittleren axialen Abschnitt. Insofern der Längsschlitz einen stufigen Verlauf aufweist, kann vorzugsweise vorgesehen sein, dass die Sollbruchstelle oder das Filmscharnier innerhalb zumindest einer Stufe bzw. eines Vor- und/oder Rücksprungs bzw. "Versatzes" des Längsschlitzes ausgebildet ist.

Im Bereich der Sollbruchstelle kann die Stützhülse während der Komprimierung somit definiert abbrechen, wodurch die Passage durch den Längsschlitz einerseits im mechanisch entspannten Zustand und andererseits auch im komprimierten Zustand durchgängig blockiert sein kann. Entsprechend kann auch ein Filmscharnier eine während der Montage dauerhaft blockierte Passage durch die Stützhülse verhindern, bei gleichzeitig guter Komprimierbarkeit der Stützhülse.

Die besagte Sollbruchstelle und das Filmscharnier können die Komprimierbarkeit der Stützhülse weiter verbessern.

In einer Weiterbildung der Erfindung kann vorgesehen sein, dass die Stützhülse zumindest ein Paar von in Umfangsrichtung der Stützhülse versetzten Längsschlitzen aufweist. Es kann insbesondere vorgesehen sein, dass sich die Längsschlitze eines gemeinsamen Paares ausgehend von gegenüberliegenden axialen Enden teilweise durch die Stützhülse erstrecken.

Es kann vorzugsweise vorgesehen sein, dass die Längsschlitze eines gemeinsamen Paares in einem axialen Abschnitt der Stützhülse derart nebeneinander verlaufen (vorzugsweise zumindest in einem Teilsegment parallel zueinander verlaufen), dass in besagtem axialem Abschnitt in Umfangsrichtung der Stützhülse zwischen den beiden Längsschlitzen ein Trennwandsegment ausgebildet wird.

Somit kann eine Passage für Einzeldrähte des Kabelschirms also insbesondere auch in einem mittleren axialen Abschnitt der Stützhülse durch das Trennwandsegment blockiert sein.

Dieses Trennwandsegment kann vorzugsweise (aber nicht notwendigerweise) eine Sollbruchstelle oder ein Filmscharnier aufweisen bzw. als Sollbruchstelle oder Filmscharnier ausgebildet sein.

Zusammengefasst können insbesondere die folgenden Varianten vorgesehen sein, um zu vermeiden, dass sich eine unerwünschte Passage für einzelne Drähte des Kabelschirms des elektrischen Kabels in Längsachsrichtung und/oder Radialrichtung durch die Stützhülse ergibt:
- Der Längsschlitz weist einen derartigen Verlauf auf (kurvig und/oder stufig), dass es innerhalb dessen Verlaufs zu einer Berührung von Kanten und/oder Seitenwänden kommt; und/oder
- der Längsschlitz weist einen derartigen Verlauf auf (kurvig und/oder stufig), dass sich eine ausreichende Verengung ergibt, die eine Passage für einen Einzeldraht des Kabelschirms zumindest mit ausreichender Wahrscheinlichkeit ausschließt oder die Passage derart verlängert, dass sichergestellt ist, dass der Einzeldraht nicht mehr aus dem axialen Ende der Stützhülse bzw. aus dem Längsschlitz auszutreten vermag; und/oder
- der Längsschlitz ist durch eine Sollbruchstelle unterbrochen; und/oder
- der Längsschlitz ist durch ein Filmscharnier unterbrochen.

In einer Weiterbildung der Erfindung kann vorgesehen sein, dass die Stützhülse zumindest einen sich in Axialrichtung zumindest abschnittsweise verjüngenden Verlauf aufweist, insbesondere einen sich in einem axialen Endabschnitt oder in beiden axialen Endabschnitten der Stützhülse in Richtung auf das korrespondierende axiale Ende der Stützhülse verjüngenden Verlauf.

Durch einen verjüngenden Verlauf kann die Presskraft zur Verpressung bzw. Vercrimpung der Stützhülse mit dem Außenleiterkontaktelement und/oder der erforderliche Deformationsweg für die Stützhülse verringert werden, wodurch die mechanischen Anforderungen an die Stützhülse reduziert sein können. Die Materialien für die Stützhülse (Kunststoffwerkstoff und Zusatzwerkstoff) können dadurch flexibler ausgewählt und kombiniert werden.

Ein sich zumindest abschnittsweise verjüngender Verlauf der Stützhülse kann außerdem vorteilhaft sein, um einen ergänzenden Formschluss bei der späteren Verpressung bzw. Vercrimpung mit dem Außenleiterkontaktelement zu erzeugen, was zu einer verbesserten Fixierung der Stützhülse samt Außenleiterkontaktelement auf dem elektrischen Kabel führen kann, insbesondere zu einer verbesserten Fixierung der Stützhülse auf dem Kabelmantel des Kabels (optional).

Der verjüngende Verlauf kann bereits in dem mechanisch entspannten Zustand der Stützhülse vorliegen. Alternativ oder zusätzlich kann vorgesehen sein, dass der verjüngende Verlauf erst durch die Komprimierung der Stützhülse erzeugt wird. Hierfür kann es vorteilhaft (aber nicht unbedingt erforderlich) sein, wenn die Stützhülse eine Mehrzahl von Längsschlitzen aufweist, die entlang des Umfangs der Stützhülse verteilt sind, und die sich jeweils nur abschnittsweise in axialer Richtung durch die Stützhülse erstrecken.

In einer Weiterbildung der Erfindung kann vorgesehen sein, dass die Stützhülse einen an einem axialen Ende der Stützhülse ausgebildeten, zumindest teilringförmigen Bund oder mehrere an dem axialen Ende der Stützhülse entlang des Umfangs verteilt angeordnete Bundsegmente aufweist, um jeweils einen Anschlag für einen Kabelmantel des elektrischen Kabels auszubilden.

Auf diese Weise kann sich die Stützhülse relativ zum Kabel bzw. Kabelmantel optimal positionieren lassen.

Vorzugsweise sind die entlang des Umfangs verteilt angeordneten Bundsegmente äquidistant beabstandet. Dies ist allerdings nicht unbedingt erforderlich.

In einer Weiterbildung der Erfindung kann außerdem vorgesehen sein, dass die Stützhülse wenigstens eine innenmantelseitige Erhebung, beispielsweise wenigstens einen innenmantelseitigen Vorsprung, aufweist.

Die innenmantelseitige Erhebung kann vorteilhaft sein, um die Stützhülse besser an Kabelkomponenten des Kabels zu fixieren, indem ein Formschluss in Ergänzung zu dem Kraftschluss zum Einsatz kommt. Somit kann die Stützhülse beispielsweise besser auf dem Kabelmantel des Kabels und/oder einem Dielektrikum/Isolator des Kabels fixiert sein. Auf diese Weise kann die Fixierung der Stützhülse auf dem Kabel insbesondere bei Kabelquerzug und/oder Kabellängszug verbessert sein.

Bei der wenigstens einen innenmantelseitigen Erhebung kann es sich beispielsweise um Rippen oder Widerhaken handeln.

Die Erfindung betrifft auch eine Kabelsteckverbinderanordnung, insbesondere für die Hochvolttechnik, aufweisend eine Stützhülse gemäß den vorstehenden und nachfolgenden Ausführungen, das elektrische Kabel und ein Außenleiterkontaktelement eines elektrischen Steckverbinders.

Es ist für die Kabelsteckverbinderanordnung vorgesehen, dass die Stützhülse auf dem Endabschnitt des elektrischen Kabels angeordnet ist. Vorzugsweise ist ein freigelegter Abschnitt des Kabelschirms des elektrischen Kabels auf einer Außenmantelfläche der Stützhülse positioniert, wobei das Außenleiterkontaktelement derart auf der Stützhülse positioniert und die Stützhülse und das Außenleiterkontaktelement derart miteinander verpresst, vorzugsweise vercrimpt sind, dass die Stützhülse in ihren elastisch vorgespannten Zustand komprimiert und der Kabelschirm hierdurch zwischen der Stützhülse und dem Außenleiterkontaktelement fixiert ist (kraftschlüssig und/oder formschlüssig).

Die Stützhülse eignet sich besonders vorteilhaft zur Verwendung mit Hochvoltsteckverbindern, wobei es auf den Steckverbindertyp und dessen Verwendung grundsätzlich nicht unbedingt ankommt. Die Stützhülse kann sich daher insbesondere auch zur Verwendung in der Hochfrequenztechnik, also beispielsweise für Datensteckverbinder, gut eignen.

Der elektrische Steckverbinder ist nicht zwingend als Teil der Kabelsteckverbinderanordnung zu verstehen. Es kann allerdings vorgesehen sein, dass die Kabelsteckverbinderanordnung auch den elektrischen Steckverbinder aufweist. Ferner kann die Kabelsteckverbinderanordnung wenigstens ein Innenleiterkontaktelement aufweisen, das mit zumindest einem Innenleiter des elektrischen Kabels elektrisch und mechanisch verbunden ist (z. B. vercrimpt). Grundsätzlich können im Rahmen der vorgeschlagenen Kabelsteckverbinderanordnung beliebige weitere Komponenten eines elektrischen Steckverbinders und/oder eines elektrischen Kabels vorgesehen sein.

Optional kann vorgesehen sein, dass das Außenleiterkontaktelement Hinterschneidungen aufweist, um einen axialen Formschluss / Anschlag für die Stützhülse bereitzustellen und damit die gegenseitige axiale Fixierung zu verbessern.

Für eine Verbesserung der Fixierung zwischen Außenleiterkontaktelement und Stützhülse kann optional außerdem vorgesehen sein, dass das Außenleiterkontaktelement innenmantelseitige Erhebungen und/oder Vertiefungen und/oder dass die Stützhülse außenmantelseitige Erhebungen und/oder Vertiefungen aufweist, beispielsweise wenigstens einen innenmantelseitigen Vor- und/oder Rücksprung, z. B. Rasthaken, Rippen, Rillen und/oder Widerhaken.

Es kann optional vorgesehen sein, dass die Stützhülse einen an einem axialen Ende ausgebildeten, zumindest teilringförmigen Flansch oder mehrere an dem axialen Ende der Stützhülse entlang des Umfangs verteilt angeordnete Flanschsegmente aufweist (vorzugsweise entlang des Umfangs äquidistant verteilt), um jeweils einen Anschlag für eine Steckverbinder- oder Kabelkomponente auszubilden (insbesondere einen Anschlag für das Außenleiterkontaktelement). Auf diese Weise kann sich die Stützhülse relativ zu Steckverbinder- und/oder Kabelkomponenten optimal positionieren lassen.

Die Erfindung betrifft auch ein Verfahren zur Herstellung einer Kabelsteckverbinderanordnung, insbesondere zur Herstellung einer Kabelsteckverbinderanordnung für die Hochvolttechnik, aufweisend zumindest die folgenden Verfahrensschritte:
- Bereitstellen eines elektrischen Kabels, das an einem Endabschnitt einen abschnittsweise freigelegten Kabelschirm aufweist;
- Bereitstellen einer Stützhülse, die einen Kunststoffwerkstoff aufweist, dessen Relaxationsbeständigkeit und/oder Festigkeit und/oder Temperaturbeständigkeit und/oder Bruchfestigkeit durch Beimischung zumindest eines Zusatzwerkstoffes erhöht wurde;
- Bereitstellen eines Außenleiterkontaktelements eines elektrischen Steckverbinders;
- Positionieren des Endabschnitts des elektrischen Kabels in der Stützhülse;
- Positionieren des freigelegten Abschnitts des Kabelschirms auf einer Außenmantelfläche der Stützhülse; und
- Fixieren des Kabelschirms zwischen der Stützhülse und dem Außenleiterkontaktelement (kraftschlüssig und/oder formschlüssig), indem das Außenleiterkontaktelement auf der Stützhülse verpresst wird, vorzugsweise vercrimpt wird, so dass die Stützhülse ausgehend von einem mechanisch entspannten Zustand entgegen einer elastischen Rückstellkraft in einen elastisch vorgespannten Zustand komprimiert wird, in dem ein Abstand zwischen zwei gegenüberliegenden Referenzpunkten auf der Außenmantelfläche der Stützhülse gegenüber dem Abstand der beiden Referenzpunkte im mechanisch entspannten Zustand verringerten ist.

Auf vorteilhafte Weise können mit dem vorgeschlagenen Verfahren besonders wirtschaftliche und massentaugliche Stützhülsen herstellbar sein. Die Anpassung des Prozesses kann für verschiedene Kabelquerschnitte besonders einfach sein, beispielsweise indem die Dicke der Stützhülse bzw. die Wandstärke entsprechend angepasst wird.

Durch das vorgeschlagene Verfahren kann eine Stützhülse bereitgestellt werden, die unabhängig von der Wand- bzw. Materialstärke zumindest annähernd konstante Werkstoffeigenschaften aufweist.

Es kann vorgesehen sein, dass die Stützhülse im Rahmen eines Spritzverfahrens hergestellt wird. Grundsätzlich können sich allerdings noch weitere Techniken zur Herstellung der vorgeschlagenen Kunststoffstützhülse eignen.

Die Verpressung bzw. Vercrimpung kann derart erfolgen, dass die Stützhülse nach der Verpressung/Vercrimpung in wenigstens einem Winkelsegment jeweils eine radiale Verkleinerung/Verjüngung aufweist. Die vorstehend bereits erwähnte Schlitzung in der Stützhülse (vgl. Längsschlitze) kann hierfür vorteilhaft sein, um optional eine noch größere Durchmesserverjüngung zu erzielen. Auf diese Weise kann sich beispielsweise zusätzlich zum Außenleitercrimp gleichzeitig eine Verpressung bzw. eine Vercrimpung auf dem Kabelmantel des Kabels ergeben, wodurch im besten Fall eine Kabelzugsicherung entfallen kann.

In einer Weiterbildung der Erfindung kann vorgesehen sein, dass zum Verpressen des Außenleiterkontaktelements ein zumindest teilringförmiges Presswerkzeug verwendet wird, das entlang des Umfangs einen zumindest näherungsweise kurvigen Eindruck in dem Außenleiterkontaktelement erzeugt, vorzugsweise einen zumindest 6-kantigen, besonders bevorzugt zumindest 10-kantigen, weiter bevorzugt zumindest 14-kantigen Eindruck, und ganz besonders bevorzugt einen kantenlosen Eindruck.

Durch einen möglichst vielkantigen, einem kurvigen Eindruck möglichst angenäherten Crimp bis hin zu einem kantenlosen Crimp bzw. durch ein entsprechendes Presswerkzeug kann die Umformung der Stützhülse besonders schonend erfolgen. Beispielsweise kann ein sogenannter "Lamellen-Crimp" vorgesehen sein. Grundsätzlich eignet sich die erfindungsgemäße Stützhülse allerdings für beliebige Crimpverfahren und Crimpwerkzeuge.

Merkmale, die im Zusammenhang mit einem der Gegenstände der Erfindung, namentlich gegeben durch die erfindungsgemäße Stützhülse, die erfindungsgemäße Kabelsteckverbinderanordnung und das Verfahren beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1% oder weniger, und ganz besonders bevorzugt ±0,1% oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Die Erfindung betrifft auch eine von Anspruch 1 unabhängige Stützhülse eines Kabelsteckverbinders, die komprimierbar ist und einen Kunststoffwerkstoff aufweist (vorzugsweise besteht besagte Stützhülse zumindest im Wesentlichen aus dem Kunststoffwerkstoff), und deren Relaxationsbeständigkeit und/oder Festigkeit und/oder Temperaturbeständigkeit und/oder Bruchfestigkeit durch definierte materielle, strukturelle und/oder geometrische Maßnahmen erhöht ist. Beispielsweise kann besagte Stützhülse eine geeignete geometrische Form aufweisen, um äußere Kräfte im Rahmen der Kompression der Stützhülse vorteilhaft und schonend abzuleiten (beispielsweise eine zumindest annähernd elliptische, insbesondere runde Querschnittsform kann sich hierfür gut eignen). Beispielsweise kann besagte Stützhülse für einen Formschluss mit dem Außenleiterkontaktelement ausgebildet sein, beispielsweise abschnittsweise konisch ausgebildet sein oder eine ringförmig umlaufende Nut bzw. Sicke aufweisen. Beispielsweise kann auch vorgesehen sein, dass besagte Stützhülse an der dem Außenleiterkontaktelement zugewandten Kontaktfläche Rippen, Widerhaken, Rillen oder sonstige Rauheiten aufweist. Die weiteren Merkmale des Anspruchs 1 und der abhängigen Ansprüche sowie die in der vorliegenden Beschreibung beschriebenen Merkmale betreffen vorteilhafte Ausführungsformen und Varianten dieser weiteren Stützhülse, deren separate Beanspruchung sich die Anmelderin ausdrücklich vorbehält. Ferner behält sich die Anmelderin vor, ein Verfahren zur Herstellung der in diesem Absatz genannten Stützhülse zu beanspruchen, in Anlehnung an das vorstehend bereits erwähnte Verfahren, sowie eine Kabelsteckverbinderanordnung, die die besagte Stützhülse aufweist.

Nachfolgend werden Ausführungsbeispiele der Erfindung anhand der Zeichnungen näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1:: eine Kabelsteckverbinderanordnung mit einer Stützhülse, einem elektrischen Kabel und einer Außenleiterbaugruppe gemäß einem Ausführungsbeispiel der Erfindung, in einer Längsschnittdarstellung;
- Figur 2: die Kabelsteckverbinderanordnung gemäß Figur 1, wobei das Außenleiterkontaktelement und das Isolatorelement ausgeblendet sind, in einer perspektivischen Darstellung;
- Figur 3: eine Kabelsteckverbinderanordnung mit einer Stützhülse gemäß einem weiteren Ausführungsbeispiel der Erfindung, in einer Längsschnittdarstellung;
- Figur 4: eine nicht geschlitzte Stützhülse mit innenmantelseitigen Rippen, gemäß einem Ausführungsbeispiel der Erfindung, in einer perspektivischen Einzeldarstellung;
- Figur 5: eine geschlitzte Stützhülse, mit einem stufigen Verlauf des Längsschlitzes, gemäß einem Ausführungsbeispiel der Erfindung, in einer perspektivischen Einzeldarstellung;
- Figur 6: eine weitere geschlitzte Stützhülse mit stufigem Verlauf des Längsschlitzes, gemäß einem Ausführungsbeispiel der Erfindung, in einer perspektivischen Einzeldarstellung;
- Figur 7: eine weitere geschlitzte Stützhülse, mit einem stufigen Verlauf des Längsschlitzes, gemäß einem Ausführungsbeispiel der Erfindung, in einer perspektivischen Einzeldarstellung;
- Figur 8: eine weitere geschlitzte Stützhülse mit stufigem Verlauf des Längsschlitzes, gemäß einem Ausführungsbeispiel der Erfindung, in einer perspektivischen Einzeldarstellung;
- Figur 9: eine weitere geschlitzte Stützhülse mit stufigem Verlauf des Längsschlitzes, wobei innerhalbeiner Stufe in dem Verlauf ein Filmscharnier oder eine Sollbruchstelle ausgebildet ist, gemäß einem Ausführungsbeispiel der Erfindung, in einer perspektivischen Einzeldarstellung;
- Figur 10: eine weitere geschlitzte Stützhülse mit einem Filmscharnier oder einer Sollbruchstelle, gemäß einem Ausführungsbeispiel der Erfindung, in einer perspektivischen Einzeldarstellung;
- Figur 11: eine Stützhülse mit zwei Paaren von in Umfangsrichtung versetzten Längsschlitzen, gemäß einem Ausführungsbeispiel der Erfindung, in einer perspektivischen Einzeldarstellung;
- Figur 12: eine mehrfach geschlitzte Stützhülse zur Erzeugung eines konischen Verlaufs durch Komprimierung der Stützhülse, mit innenmantelseitigen Widerhaken, gemäß einem Ausführungsbeispiel der Erfindung, in einer perspektivischen Einzeldarstellung;
- Figur 13: die Stützhülse gemäß Figur 12 in einer seitlichen Schnittdarstellung in ihrem mechanisch entspannten Zustand;
- Figur 14: die Stützhülse gemäß Figur 12 in einer seitlichen Schnittdarstellung in ihrem elastisch vorgespannten Zustand;
- Figur 15: eine Kabelsteckverbinderanordnung mit einer konischen Stützhülse gemäß einem weiteren Ausführungsbeispiel der Erfindung, in einer Längsschnittdarstellung;
- Figur 16-18: verschiedene Varianten konischer Stützhülsen gemäß Ausführungsbeispielen der Erfindung, in jeweiligen seitlichen Schnittdarstellungen; und
- Figur 19: eine Stützhülse gemäß einem Ausführungsbeispiel mit einer Verjüngung im mittleren axialen Abschnitt.

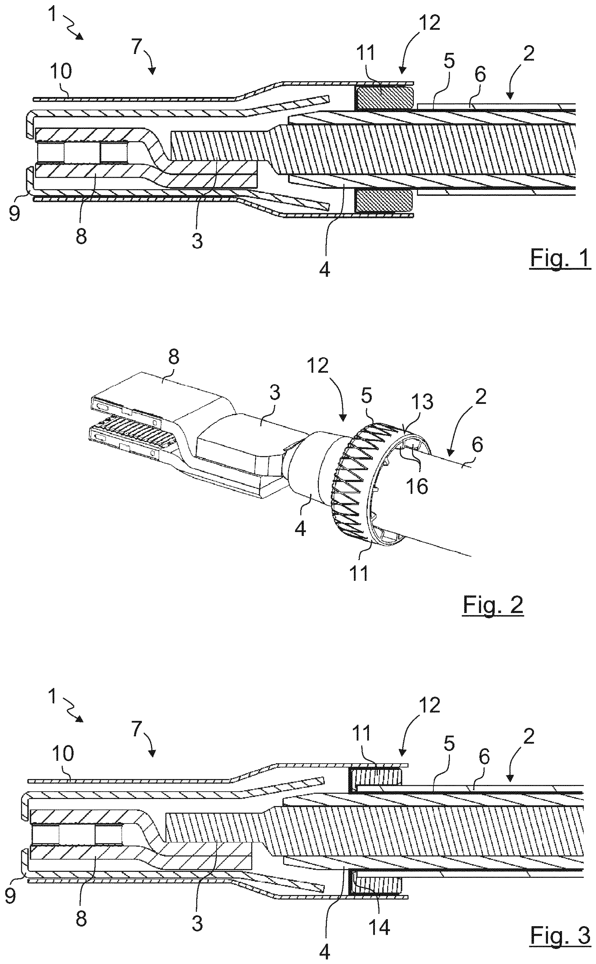

Die Figuren 1 und 2 zeigen eine Kabelsteckverbinderanordnung 1 gemäß einem ersten Ausführungsbeispiel der Erfindung. Die in den Figuren dargestellte Kabelsteckverbinderanordnung 1 eignet sich insbesondere zur Verwendung in der Hochvolttechnik, wobei die Erfindung nicht auf diese Anwendung beschränkt zu verstehen ist und sich beispielsweise auch zur Verwendung mit Datensteckverbindern und der Hochfrequenztechnik vorteilhaft eignen kann.

Die Kabelsteckverbinderanordnung 1 weist ein elektrisches Kabel 2 auf, bei dem es sich beispielhaft um ein Koaxialkabel handelt. Das elektrische Kabel 2 weist einen Innenleiter 3 auf, der von einem Dielektrikum 4 umhüllt ist, auf dem ein Kabelschirm 5 verläuft. Im Ausführungsbeispiel handelt es sich bei dem Kabelschirm 5 um ein aus mehreren Einzeldrähten gebildetes Kabelschirmgeflecht. Um den Kabelschirm 5 herum verläuft ein elektrisch isolierender Kabelmantel 6. Wie dargestellt, ist das elektrische Kabel 2 abschnittsweise abisoliert, um den Innenleiter 3 und den Kabelschirm 5 zur Konfektionierung mit einem elektrischen Steckverbinder 7 zugänglich zu machen. Der Innenleiter 3 des Kabels 2 ist plattenförmig kompaktiert und mit einem Innenleiterkontaktelement 8 des Steckverbinders 7 verbunden, beispielsweise verschweißt, wobei es auf die konkrete Verbindungsart des Innenleiters 3 und des Innenleiterkontaktelements 8 im Rahmen der Erfindung nicht unbedingt ankommt. Das Innenleiterkontaktelement 8 des Steckverbinders 7 ist zumindest teilweise von einem Isolatorelement 9 umgeben, um einen Berührschutz und eine elektrische Trennung zwischen einem Außenleiterkontaktelement 10 des Steckverbinders 7 und dem Innenleiterkontaktelement 8 bereitzustellen. Das Isolatorelement 9 und das Außenleiterkontaktelement 10 sind in Figur 2 zur besseren Darstellung nicht dargestellt.

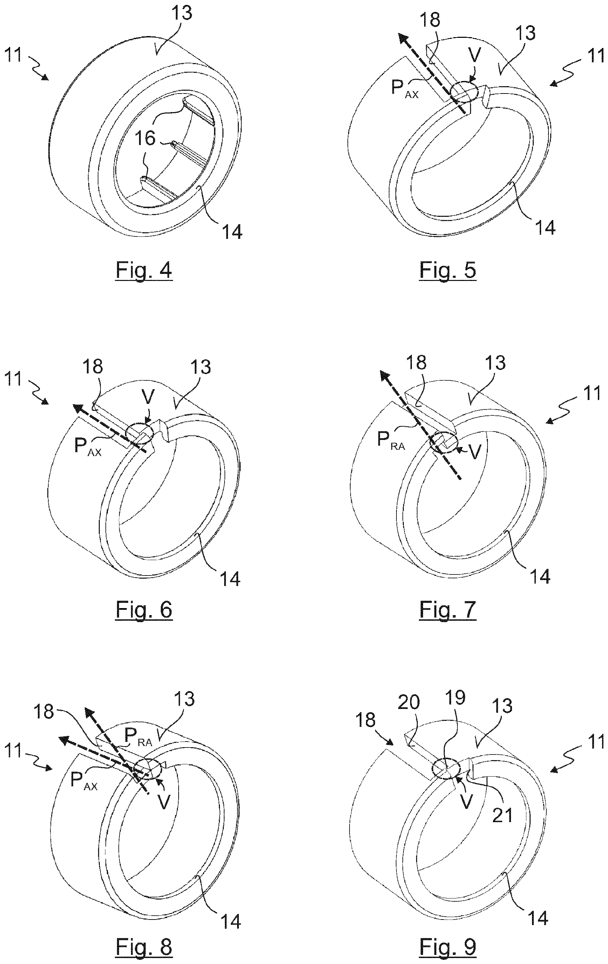

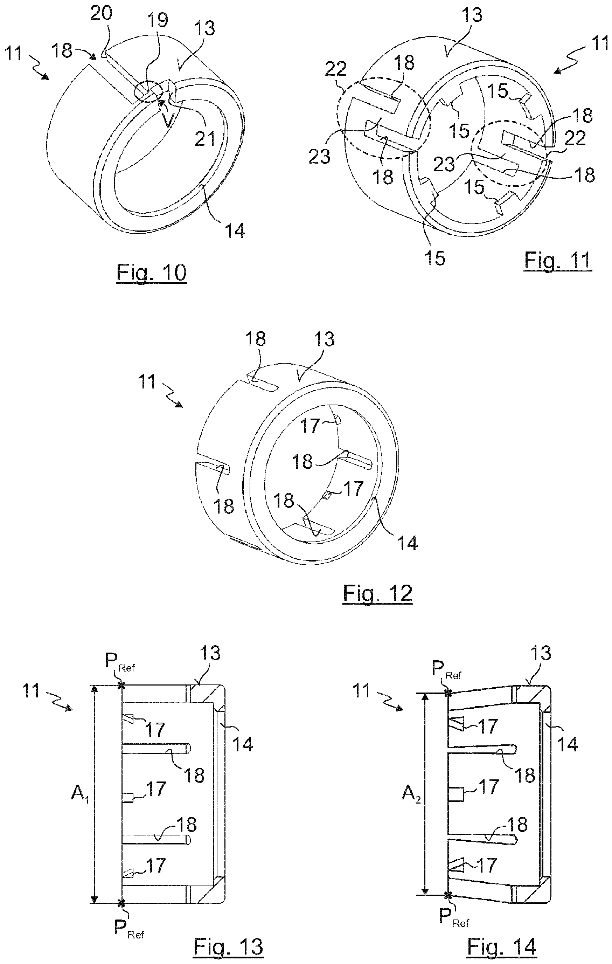

Die Kabelsteckverbinderanordnung 1 weist eine Stützhülse 11 zur Fixierung des Kabelschirms 5 auf. Die Stützhülse 11 ist hierzu auf dem entsprechenden Endabschnitt 12 des elektrischen Kabels 2 angeordnet. Der freigelegte Abschnitt des Kabelschirms 5 des elektrischen Kabels 2 ist auf einer Außenmantelfläche 13 der Stützhülse 11 positioniert (vgl. Figur 2 und z. B. Figur 4) und kann hierfür beispielsweise nach hinten über die Stützhülse 11 umgelegt werden, wie dargestellt. Das Außenleiterkontaktelement 10 ist schließlich derart auf der Stützhülse 11 positioniert und verpresst (insbesondere vercrimpt), dass die Stützhülse 11 ausgehend von einem mechanisch entspannten Zustand entgegen einer elastischen Rückstellkraft in einen elastisch vorgespannten Zustand komprimiert ist, in dem ein erster Abstand A₁ zwischen zwei gegenüberliegenden Referenzpunkten P_{Ref} auf der Außenmantelfläche 13 der Stützhülse 11 gegenüber einem zweiten Abstand A₂ der beiden Referenzpunkte P_{Ref} im mechanisch entspannten Zustand verringert ist (vgl. beispielsweise Figuren 13 und 14). Hierdurch kann der Kabelschirm 5 schließlich sicher zwischen der Stützhülse 11 und dem Außenleiterkontaktelement 10 fixiert werden.

Im Rahmen der Erfindung ist vorgesehen, dass die Stützhülse 11 einen Kunststoffwerkstoff aufweist, dessen Relaxationsbeständigkeit und/oder Festigkeit und/oder Temperaturbeständigkeit und/oder Bruchfestigkeit durch definierte materielle, strukturelle und/oder geometrische Maßnahmen erhöht ist. Insbesondere kann dies durch Beimischung zumindest eines Zusatzwerkstoffs zu dem Kunststoffwerkstoff erreicht werden.

Vorzugsweise besteht die Stützhülse 11 zumindest im Wesentlichen aus dem Kunststoffwerkstoff und dem beigemischten Zusatzwerkstoff. Der Zusatzwerkstoff kann insbesondere die Form von Fasern und/oder Kugeln aufweisen. Vorzugsweise kann Glas, Kohlenstoff oder Aramid als Zusatzwerkstoff vorgesehen sein, wobei sich insbesondere die Verwendung von Glasfasern, Kohlenstofffasern oder Aramidfasern als besonders geeignet herausgestellt haben. Es kann ferner vorteilhaft sein, wenn der Kunststoffwerkstoff einen Anteil des Zusatzwerkstoffs von 10% bis 60%, vorzugsweise 20% bis 50%, weiter bevorzugt 25% bis 40%, besonders bevorzugt 30% bis 35%, aufweist. In einer ganz besonders bevorzugten Variante kann der Anteil des Zusatzwerkstoffs beispielsweise zumindest im Wesentlichen 30% betragen.

Bei dem Kunststoffwerkstoff kann es sich vorzugsweise um einen relaxationsbeständigen Kunststoff handeln, wie beispielsweise Polyamid, Polybutylenterephthalat oder Polyetherimid.

Zum Verpressen des Außenleiterkontaktelements 10 auf der Stützhülse 11 kann ein zumindest teilringförmiges Presswerkzeug verwendet werden (nicht dargestellt), das entlang des Umfangs des Außenleiterkontaktelements 10 einen zumindest näherungsweise kurvigen Eindruck in dem Außenleiterkontaktelement 10 erzeugt, also vorzugsweise einen Eindruck mit möglichst vielen Kanten. Vorzugsweise kann zumindest ein 6-kantiger Crimp, besonders bevorzugt zumindest ein 10-kantiger Crimp, weiter bevorzugt zumindest ein 14-kantiger Crimp, und ganz besonders bevorzugt ein kantenloser Crimp vorgesehen sein. Grundsätzlich können allerdings beliebige Presswerkzeuge und Crimpverfahren im Rahmen des erfindungsgemäßen Herstellungsverfahrens zum Einsatz kommen.

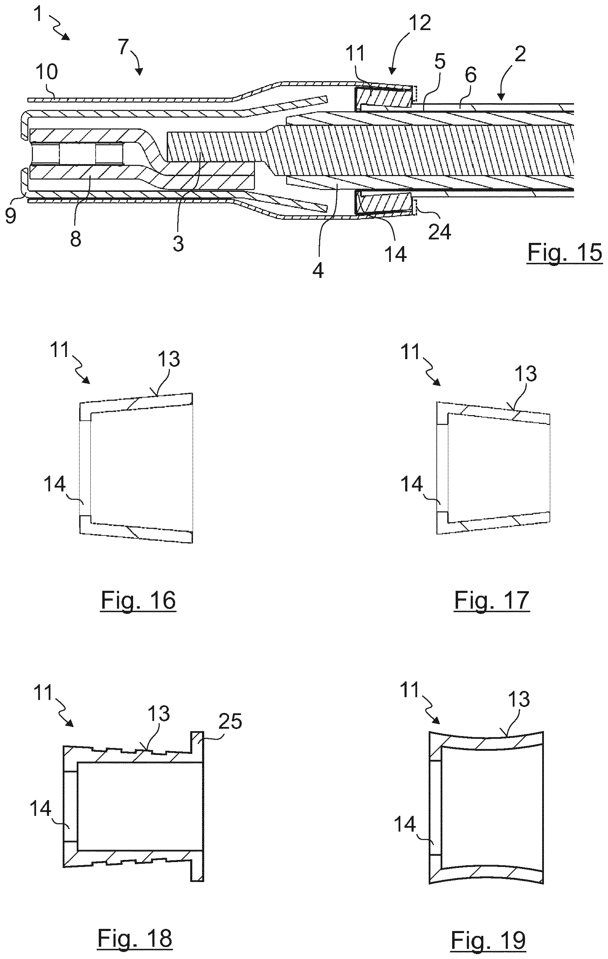

Die Stützhülse 11 kann grundsätzlich auf einer beliebigen Kabelkomponente des Kabels 2 fixiert sein, also beispielsweise unmittelbar auf dem Kabelschirm 5, wie in den Figuren 1 und 2 dargestellt, oder alternativ auch unmittelbar (vollständig oder teilweise) auf dem Kabelmantel 6 des Kabels 2 (vgl. Figur 3 und Figur 15). Bei einer Fixierung teilweise auf dem Kabelmantel 6 des Kabels 2 kann es von Vorteil sein, wenn die Stützhülse 11 einen an einem axialen Ende ausgebildeten, zumindest teilringförmigen Bund 14 aufweist (vgl. u. a. Figur 3 und Figur 4), um einen Anschlag für den Kabelmantel 6 des elektrischen Kabels 2 auszubilden. Auf diese Weise kann die Stützhülse 11 an einer definierten axialen Position auf dem Kabel 2 befestigt werden. Als Alternative zu einem teilringförmigen Bund 14 können beispielsweise auch mehrere an dem axialen Ende der Stützhülse 11 entlang des Umfangs verteilt angeordnete Bundsegmente 15 vorgesehen sein, wie in Figur 11 angedeutet. Grundsätzlich kann ein Bund 14 oder können Bundsegmente 15 auch vollständig entfallen (vgl. z. B. die Figuren 1 und 2).

Um die Festhaltung bzw. Fixierung zwischen der Stützhülse 11 und der entsprechenden Kabelkomponente des Kabels 2, insbesondere den Kabelmantel 6 des Kabels 2, weiter zu verbessern, können optional innenmantelseitige Erhebungen in der Stützhülse vorgesehen sein, beispielsweise mehrere entlang des Umfangs verteilte Rippen 16 (vgl. Figuren 2 und 4) oder Widerhaken 17 (vgl. Figur 12). Die Widerstandsfähigkeit der Kabelsteckverbinderanordnung 1 gegenüber Quer- und/oder Längszug kann dadurch wesentlich erhöht sein.

Die vorgeschlagene Stützhülse 11 kann einen in Umfangsrichtung vollständig geschlossenen Querschnitt aufweisen und daher beispielsweise ringförmig ausgebildet sein, wie in den Figuren 2 und 4 dargestellt. Vorzugsweise ist allerdings eine geschlitzte Stützhülse 11 vorgesehen, also eine Stützhülse 11, die wenigstens einen in Axialrichtung zumindest teilweise durch die Stützhülse 11 verlaufenden Längsschlitz 18 aufweist, wie in den Figuren 5 bis 14 dargestellt. Mittels des wenigstens einen Längsschlitzes 18 kann die Deformierbarkeit der Stützhülse 11 erhöht sein.

Um zu vermeiden, dass im Falle einer geschlitzten Stützhülse 11 Einzeldrähte des Kabelschirms 5 des Kabels 2 unkontrolliert in axialer Richtung und/oder radialer Richtung durch den Längsschlitz 18 verlaufen und damit in dem späteren Steckverbinder 7 beispielsweise eine Abschlussdichtung durchstechen bzw. beschädigen, oder für den späteren Anwender eine Verletzungsgefahr darstellen, können verschiedene Maßnahmen vorgesehen sein, von denen einige nachfolgend diskutiert werden sollen. An dieser Stelle sei erwähnt, dass mitunter auch Anwendungsfälle vorgesehen sein können, bei denen die nachfolgend genannten Maßnahmen nicht erforderlich sind, da es nicht darauf ankommt, ob Einzeldrähte des Kabelschirms 5 den Längsschlitz 18 oder die Längsschlitze 18 der Stützhülse 11 passieren oder nicht. Die Erfindung ist daher nicht auf eine oder mehrere der nachfolgenden Varianten beschränkt zu verstehen. Insbesondere können die nachfolgenden Varianten auch beliebig miteinander kombiniert werden.

Es kann beispielsweise vorgesehen sein, dass der Längsschlitz 18 einen stufigen Verlauf V aufweist, wie dies beispielsweise in den Figuren 5 und 6 dargestellt ist. Alternativ oder zusätzlich zu einem stufigen Verlauf V kann grundsätzlich auch ein kontinuierlicher kurviger Verlauf V vorgesehen sein (in den Figuren nicht dargestellt). Auf diese Weise kann eine geradlinige Passage P_{AX}, P_{RA} durch den Längsschlitz 18, in den Figuren 5 und 6 also eine geradlinige Passage P_{AX} in axialer Richtung, durch die Stützhülse 11 blockiert (vgl. Figur 5) oder verengt (vgl. Figur 6) werden. Gleichwohl beispielsweise in Figur 6 eine durchgängige axiale Passage P_{AX} durch die Stützhülse 11 vorhanden ist, so ist es dennoch nahezu ausgeschlossen, dass ein Einzeldraht des Kabelschirms 5 die Stützhülse 11 durch den verengten Längsschlitz 18 vollständig passiert. Gleichzeitig ist bei den vorgeschlagenen Varianten gemäß den Figuren 5 und 6 weiterhin eine Komprimierung der Stützhülse 11 über einen vergleichsweise weiten Federweg möglich. Wie anhand der Figuren 5 und 6 verdeutlicht, kann es zur Blockierung der axialen Passagen P_{AX} bereits ausreichend sein, wenn diese nur in einem axialen Abschnitt (in den Figuren 5 und 6 an dem kabelmantelseitigen Endabschnitt der Stützhülse 11) blockiert ist. Dabei kommt es nicht unbedingt darauf an, an welcher axialen Stelle der Durchgang bzw. die Passage P_{AX} blockiert oder verengt ist, wie nachfolgend noch diskutiert.

Alternativ zu einem stufigen oder kurvigen Verlauf V des Längsschlitzes 18 zur Blockierung einer axialen Passage P_{AX} kann der Längsschlitz 18 auch einen stufigen oder kurvigen Verlauf V zur Blockierung einer radialen Passage P_{RA} aufweisen, wie anhand von Figur 7 verdeutlicht werden soll. Auf diese Weise kann vermieden werden, dass Einzeldrähte des Kabelschirms 5 von der Innenseite der Stützhülse 11 unkontrolliert in radialer Richtung entlang einer radialen Passage P_{RA} durch den Längsschlitz 18 hindurchtreten und infolge beispielsweise über das axiale Ende der Stützhülse 11 hinausragen. Auch dies kann wiederum nur abschnittsweise entlang der Längserstreckung der Stützhülse 11 erfolgen, wie in Figur 8 dargestellt.

In Figur 8 wird einerseits eine axiale Passage P_{AX} als auch eine radiale Passage P_{RA} durch den Verlauf (V) Längsschlitz 18 blockiert.

Es kann auch vorgesehen sein, dass der Längsschlitz 18 durch eine Sollbruchstelle 19 oder ein Filmscharnier unterbrochen ist, insbesondere innerhalb dessen kurvigen und/oder stufigen Verlaufs (V), vorzugsweise innerhalb der Stufe bzw. des Vor- und/oder Rücksprunges in dem Längsschlitz 18, wie in den Figuren 9 und 10 angedeutet. Auf diese Weise kann der Längsschlitz 18 in einen ersten Teilabschnitt 20 und in einen zweiten Teilabschnitt 21 unterteilt sein.

Wie vorstehend bereits erwähnt, kommt es vorliegend nicht unbedingt darauf an, an welcher axialen Stelle entlang der Längserstreckung der Stützhülse 11 eine Verengung oder Blockierung der Passage P_{AX}, P_{RA} durch die Stützhülse 11 erfolgt. Wohingegen in den vorstehend diskutierten Figuren vorzugsweise eine Blockierung an einem axialen Ende der Stützhülse 11 vorgesehen ist, soll anhand von Figur 11 verdeutlicht werden, wie eine axiale Passage P_{AX} im Fall einer geschlitzten Stützhülse 11 in einem mittleren Abschnitt der Stützhülse blockiert sein kann.

Die in Figur 11 dargestellte Stützhülse 11 weist zwei Paare 22 von in Umfangsrichtung der Stützhülse 11 versetzten Längsschlitze 18 auf, die sich von gegenüberliegenden axialen Enden jeweils teilweise durch die Stützhülse 11 erstrecken und die in einem axialen Abschnitt der Stützhülse 11 so nebeneinander verlaufen, dass in besagtem axialen Abschnitt in Umfangsrichtung der Stützhülse 11 zwischen den beiden Längsschlitzen 18 ein Trennwandsegment 23 ausgebildet wird. Dieses Trennwandsegment 23 kann optional wiederum als Sollbruchstelle 19 oder Filmscharnier ausgebildet sein (dies ist allerdings nicht unbedingt erforderlich und in Figur 11 auch nicht dargestellt). Durch die Komprimierung der Stützhülse 11 im Rahmen der Montage auf dem Kabel 2 bzw. innerhalb des Außenleiterkontaktelements 10 kann die Stützhülse 11 entlang der Paare 22 von Längsschlitzen 18 somit kurvig, in der Regel annähernd "Sförmig", komprimiert werden.

Die Paare von in Umfangsrichtung der Stützhülse 11 versetzten Längsschlitzen 18 können sich optional auch dazu eignen, im Rahmen der Verpressung der Stützhülse 11 mit dem Außenleiterkontaktelement 10 eine Verjüngung in der Stützhülse 11 zu bewirken.

Eine Verjüngung der Stützhülse 11 an zumindest einem axialen Ende (oder alternativ auch in einem mittleren axialen Abschnitt) kann vorteilhaft sein, um zusätzlich zu einem Kraftschluss außerdem einen Formschluss zwischen Stützhülse 11, Außenleiterkontaktelement 10 und/oder Kabelkomponente, wie beispielsweise Kabelmantel 6, zu erzeugen. Anhand der Figuren 12 bis 14 ist hierfür beispielhaft eine Stützhülse 11 mit einer Mehrzahl Längsschlitzen 18 dargestellt, wobei die Längsschlitze 18 entlang des Umfangs der Stützhülse 11 verteilt sind und sich jeweils nur abschnittsweise in axialer Richtung durch die Stützhülse 11 erstrecken. Auf diese Weise lässt sich der verjüngende Verlauf durch Komprimierung der Stützhülse 11 an dem axialen Ende der Stützhülse 11 erzeugen, das die Längsschlitze 18 aufweist. Figur 13 zeigt die Stützhülse 11 in ihrem nicht komprimierten Zustand und Figur 14 in ihrem komprimierten Zustand. Wie vorstehend bereits erwähnt, ist es allerdings nicht unbedingt erforderlich, dass die Stützhülse 11 einen oder mehrere Längsschlitze 18 aufweist, um den verjüngenden Verlauf zu erzeugen, gleichwohl die Längsschlitze 18 diesbezüglich vorteilhaft sein können.

Ferner ist in Figur 15 eine Kabelsteckverbinderanordnung 1 mit einer in ihrem hinteren, dem Kabel 2 zugewandten axialen Ende konisch komprimierten Stützhülse 11 gezeigt. Um den Formschluss zwischen Außenleiterkontaktelement 10 und Stützhülse 11 weiter zu verbessern, kann optional auch eine Hinterschneidung 24 des Außenleiterkontaktelements 10 vorgesehen sein (in Figur 15 strichliniert dargestellt).

An dieser Stelle sei erwähnt, dass sich ein verjüngender Verlauf der Stützhülse 11 nicht unbedingt erst im Rahmen der Komprimierung ergeben muss. Der sich verjüngende Verlauf kann beispielsweise bereits in dem mechanisch entspannten Zustand der Stützhülse 11 vorliegen. Ferner ist es auch nicht unbedingt erforderlich, dass die Stützhülse 11 für die Komprimierung überhaupt geschlitzt ist, wie in den Figuren 12 bis 14 dargestellt. Ein sich verjüngender Verlauf der Stützhülse 11 kann daher also im Rahmen der Montage / des Crimprozesses auch in eine nicht geschlitze Stützhülse 11 eingepresst werden.

Einige weitere Beispiele für Stützhülsen 11 mit einer Verjüngung sind in den Figuren 16 bis 19 angegeben. Die Figuren 16 bis 18 zeigen dabei exemplarisch Varianten mit einer Verjüngung ausgehend von einem axialen Ende der Stützhülse 11 und Figur 19 eine Verjüngung in einem mittleren axialen Abschnitt. Anstelle des in Figur 19 dargestellten konkaven Verlaufs kann sich gegebenenfalls auch ein konvexer außenmantelseitiger Verlauf der Stützhülse 11 eignen, um den Formschluss mit dem Außenleiterkontaktelement 10 herzustellen oder zu verbessern.

Für eine Verbesserung der Fixierung zwischen Außenleiterkontaktelement 10 und Stützhülse 11 kann optional vorgesehen sein, dass das Außenleiterkontaktelement 10 innenmantelseitige Erhebungen und/oder Vertiefungen aufweist (in den Figuren nicht dargestellt). Alternativ oder zusätzlich kann vorgesehen sein, dass die Stützhülse 11 an ihrer Außenmantelfläche 13 außenmantelseitige Erhebungen und/oder Vertiefungen aufweist, wie beispielsweise in Figur 18 angedeutet. Die genannten Verbesserungsmaßnahmen sind selbstverständlich unabhängig von der in Figur 18 ebenfalls dargestellten Verjüngung oder sonstiger Merkmale der Figur 18 realisierbar.

Es kann optional außerdem vorgesehen sein, dass die Stützhülse 11 einen an einem axialen Abschnitt (insbesondere an einem axialen Ende) ausgebildeten, zumindest teilringförmigen Flansch 25 oder mehrere entlang des Umfangs verteilt angeordnete Flanschsegmente (nicht dargestellt) aufweist, um einen Anschlagbereich für eine Steckverbinder- oder Kabelkomponente auszubilden - insbesondere einen Anschlag für das Außenleiterkontaktelement 10. Auf diese Weise kann sich die Stützhülse 11 relativ zu Steckverbinder- und/oder Kabelkomponenten - insbesondere zu dem Außenleiterkontaktelement 10 - optimal positionieren lassen. Der Flansch 25 bzw. die Flanschsegmente bzw. der Anschlagbereich ist selbstverständlich unabhängig von der in Figur 18 ebenfalls dargestellten Verjüngung oder sonstiger Merkmale der Figur 18 realisierbar.

## Patentansprüche

1. Stützhülse (11) zur Fixierung eines Kabelschirms (5) eines elektrischen Kabels (2), wobei die Stützhülse (11) zur Aufnahme eines Endabschnitts (12) des elektrischen Kabels (2) ausgebildet ist, und ausgehend von einem mechanisch entspannten Zustand entgegen einer elastischen Rückstellkraft in einen elastisch vorgespannten Zustand komprimierbar ist, in dem ein erster Abstand (A₁) zwischen zwei gegenüberliegenden Referenzpunkten (P_{Ref}) auf einer Außenmantelfläche (13) der Stützhülse (11) gegenüber einem zweiten Abstand (A₂) der beiden Referenzpunkte (P_{Ref}) im mechanisch entspannten Zustand verringerten ist, und wobei die Stützhülse (11) einen Kunststoffwerkstoff aufweist, dessen Relaxationsbeständigkeit und/oder Festigkeit und/oder Temperaturbeständigkeit und/oder Bruchfestigkeit durch Beimischung zumindest eines Zusatzwerkstoffes erhöht ist.

2. Stützhülse (11) nach Anspruch 1,
**dadurch gekennzeichnet, dass**
die Stützhülse (11) zumindest im Wesentlichen aus dem Kunststoffwerkstoff mit dem beigemischten Zusatzwerkstoff besteht.

3. Stützhülse (11) nach Anspruch 1 oder 2,
**dadurch gekennzeichnet, dass**
der Zusatzwerkstoff die Form von Fasern und/oder Kugeln aufweist, wobei vorzugsweise Glas, Kohlenstoff, Aramid, Metall und/oder ein organischer Werkstoff als Zusatzwerkstoff vorgesehen ist.

4. Stützhülse (11) nach einem der Ansprüche 1 bis 3,
**dadurch gekennzeichnet, dass**
der Kunststoffwerkstoff einen Anteil des Zusatzwerkstoffes von 10% bis 60%, vorzugsweise 20% bis 50%, weiter bevorzugt 25% bis 40%, besonders bevorzugt 30% bis 35% aufweist.

5. Stützhülse (11) nach einem der Ansprüche 1 bis 4,
**dadurch gekennzeichnet, dass**
es sich bei dem Kunststoffwerkstoff um Polyamid, Polybutylenterephthalat oder Polyetherimid handelt.

6. Stützhülse (11) nach einem der Ansprüche 1 bis 5,
**gekennzeichnet durch**
wenigstens einen in Axialrichtung zumindest teilweise durch die Stützhülse (11) verlaufenden Längsschlitz (18).

7. Stützhülse (11) nach Anspruch 6,
**dadurch gekennzeichnet, dass**
der Längsschlitz (18) einen kurvigen und/oder stufigen Verlauf (V) aufweist, so dass eine geradlinige Passage (P_{AX}, P_{RA}) durch den Längsschlitz (18), insbesondere eine in axialer Richtung und/oder radialer Richtung der Stützhülse (11) verlaufende geradlinige Passage (P_{AX}, P_{RA}), verengt oder blockiert ist.

8. Stützhülse (11) nach Anspruch 7,
**dadurch gekennzeichnet, dass**
der Längsschlitz (18) innerhalb des kurvigen und/oder stufigen Verlaufs (V) durch eine Sollbruchstelle (19) oder ein Filmscharnier unterbrochen ist, so dass der Längsschlitz (18) in einen ersten Teilabschnitt (20) und einen zweiten Teilabschnitt (21) unterteilt ist.

9. Stützhülse (11) nach einem der Ansprüche 1 bis 8,
**gekennzeichnet durch**
zumindest ein Paar (22) von in Umfangsrichtung der Stützhülse (11) versetzten Längsschlitzen (18), die sich von gegenüberliegenden axialen Enden teilweise durch die Stützhülse (11) erstrecken, und die in einem axialen Abschnitt der Stützhülse (11) so nebeneinander verlaufen, dass in besagtem axialem Abschnitt in Umfangsrichtung der Stützhülse (11) zwischen den beiden Längsschlitzen (18) ein Trennwandsegment (23) ausgebildet wird, wobei das Trennwandsegment (23) vorzugsweise eine Sollbruchstelle (19) oder ein Filmscharnier aufweist.

10. Stützhülse (11) nach einem der Ansprüche 1 bis 9,
**gekennzeichnet durch**
zumindest einen sich in Axialrichtung zumindest abschnittsweise verjüngenden Verlauf, insbesondere einen sich in einem axialen Endabschnitt der Stützhülse (11) in Richtung auf das korrespondierende axiale Ende der Stützhülse (11) verjüngenden Verlauf, wobei vorzugsweise
- der verjüngende Verlauf bereits in dem mechanisch entspannten Zustand der Stützhülse (11) vorliegt; und/oder
- die Stützhülse (11) eine Mehrzahl von Längsschlitzen (18) aufweist, die entlang des Umfangs der Stützhülse (11) verteilt sind, und die sich jeweils nur abschnittsweise in axialer Richtung durch die Stützhülse (11) erstrecken, so dass sich der verjüngende Verlauf durch Komprimierung der Stützhülse (11) erzeugen lässt.

11. Stützhülse (11) nach einem der Ansprüche 1 bis 10,
**gekennzeichnet durch**
einen an einem axialen Ende der Stützhülse (11) ausgebildeten, zumindest teilringförmigen Bund (14) oder mehrere an dem axialen Ende der Stützhülse (11) entlang des Umfangs verteilt angeordnete Bundsegmente (15), um jeweils einen Anschlag für einen Kabelmantel (6) des elektrischen Kabels (2) auszubilden.

12. Stützhülse (11) nach einem der Ansprüche 1 bis 11,
**gekennzeichnet durch**
wenigstens eine innenmantelseitige Erhebung, vorzugsweise mehrere entlang des Umfangs verteilte innenmantelseitig Erhebungen, insbesondere Rippen (16) oder Widerhaken (17).

13. Kabelsteckverbinderanordnung (1), insbesondere für die Hochvolttechnik, aufweisend eine Stützhülse (11) gemäß einem der Ansprüche 1 bis 12, das elektrische Kabel (2) und ein Außenleiterkontaktelement (10) eines elektrischen Steckverbinders (7), wobei die Stützhülse (11) auf dem Endabschnitt (12) des elektrischen Kabels (2) angeordnet ist, und ein freigelegter Abschnitt des Kabelschirms (5) des elektrischen Kabels (2) auf der Außenmantelfläche (13) der Stützhülse (11) positioniert ist, wobei das Außenleiterkontaktelement (10) derart auf der Stützhülse (11) positioniert und verpresst ist, vorzugsweise vercrimpt ist, dass die Stützhülse (11) in ihren elastisch vorgespannten Zustand komprimiert und der Kabelschirm (5) hierdurch zwischen der Stützhülse (11) und dem Außenleiterkontaktelement (10) fixiert ist.

14. Verfahren zur Herstellung einer Kabelsteckverbinderanordnung (1), insbesondere zur Herstellung einer Kabelsteckverbinderanordnung (1) für die Hochvolttechnik, aufweisend zumindest die folgenden Verfahrensschritte:
- Bereitstellen eines elektrischen Kabels (2), das an einem Endabschnitt (12) einen abschnittsweise freigelegten Kabelschirm (5) aufweist;
- Bereitstellen einer Stützhülse (11), die einen Kunststoffwerkstoff aufweist, dessen Relaxationsbeständigkeit und/oder Festigkeit und/oder Temperaturbeständigkeit und/oder Bruchfestigkeit durch Beimischung zumindest eines Zusatzwerkstoffes erhöht wurde;
- Bereitstellen eines Außenleiterkontaktelements (10) eines elektrischen Steckverbinders (7);
- Positionieren des Endabschnitts (12) des elektrischen Kabels (2) in der Stützhülse (11);
- Positionieren des freigelegten Abschnitts des Kabelschirms (5) auf einer Außenmantelfläche (13) der Stützhülse (11); und
- Fixieren des Kabelschirms (5) zwischen der Stützhülse (11) und dem Außenleiterkontaktelement (10), indem das Außenleiterkontaktelement (10) auf der Stützhülse (11) verpresst wird, vorzugsweise vercrimpt wird, so dass die Stützhülse (11) ausgehend von einem mechanisch entspannten Zustand entgegen einer elastischen Rückstellkraft in einen elastisch vorgespannten Zustand komprimiert wird, in dem ein erster Abstand (A₁) zwischen zwei gegenüberliegenden Referenzpunkten (P_{Ref}) auf der Außenmantelfläche (13) der Stützhülse (11) gegenüber einem zweiten Abstand (A₂) der beiden Referenzpunkte (P_{Ref}) im mechanisch entspannten Zustand verringerten ist.

15. Verfahren nach Anspruch 14,
**dadurch gekennzeichnet, dass**
zum Verpressen des Außenleiterkontaktelements (10) ein zumindest teilringförmiges Presswerkzeug verwendet wird, das entlang des Umfangs einen zumindest näherungsweise kurvigen Eindruck in dem Außenleiterkontaktelement (10) erzeugt, vorzugsweise einen zumindest 6-kantigen, besonders bevorzugt zumindest 10-kantigen, weiter bevorzugt zumindest 14-kantigen Eindruck, und ganz besonders bevorzugt einen kantenlosen Eindruck.
